# FASCICULE DE BREVET EUROPEEN

(11) **EP 1 151 651 B1**
(45) Date de publication et mention de la délivrance du brevet: **21.12.2005**
(21) Numéro de dépôt: 01401047.4
(22) Date de dépôt: 25.04.2001
(51) Int. Cl.: A01D 34/86, A01D 34/74

(54) **Dispositif de coupe de végétaux comportant un broyeur à fléaux et un ensemble de coupe**
Vegetation-Mähvorrichtung mit Schlegel-Häcksler und Schneideanordnung
Vegetation cutter comprising a shredder with flails and a cutting assembly

(30) Priorité: 04.05.2000 FR 0005699
(43) Date de publication de la demande: 07.11.2001
(73) Titulaire: Noremat, 54710 Ludres (FR)
(72) Inventeur: Bachmann, Jacques, 54550 Maiziers (FR)
(74) Mandataire: Loyer, Bertrand

(56) Documents cités:
- FR-A- 2 698 237
- FR-A- 2 771 894
- US-A- 4 314 435

## Description

Il est connu d'employer des broyeurs constitués par un arbre moteur portant une multiplicité de fléaux fixés avec un certain jeu, pour entretenir les fossés et les bas-côtés des routes.

Ces appareils sont communément appelés épareuses.

Mais il s'est avéré à l'usage que ces matériels étaient assez destructeurs de la faune et de la flore.

On a donc dans un premier temps pensé qu'il suffisait de placer le broyeur portant les fléaux à une hauteur au-dessus du sol suffisante pour que l'herbe ne soit pas coupée trop ras, c'est-à-dire à environ 15 cm au-dessus du sol.

Mais on s'est aperçu que le mouvement tournant très rapide des fléaux du broyeur avait pour effet que l'herbe se couchait ce qui provoquait une coupe très irrégulière du plus mauvais effet.

Dans le brevet français 2.698.237 du 23 novembre 1992, la demanderesse a alors résolu le problème en combinant à l'épareuse un moyen de maintien de l'herbe disposé sous le dispositif de broyage de façon pratiquement tangentielle au volume que ledit dispositif de broyage décrit en tournant. Ce moyen de maintien, qui empêche l'herbe de se coucher, est de préférence un ensemble de coupe constitué par une faucheuse rotative, c'est-à-dire constituée de disques portant des couteaux.

Ce dispositif donne de bons résultats pour la coupe de végétaux parallèlement au sol.

Cependant, comme ces épareuses sont portées au bout de bras articulés pour pouvoir être orientées, il arrive très fréquemment que les utilisateurs les positionnent en hauteur, verticalement ou horizontalement pour réaliser une taille, analogue à une haie, des arbustes longeant un fossé.

L'apparence est alors satisfaisante, mais quand on examine avec attention le travail réalisé on s'aperçoit que les branches et brindilles des arbustes ont été éclatées par les fléaux et présentent, malgré la coupe effectuée par la faucheuse, des extrémités déchiquetées et/ou fendues sur une longueur de plusieurs centimètres.

Il en résulte que ces arbrisseaux deviennent extrêmement sensibles aux maladies microbiennes et dépérissent.

La demanderesse a résolu ce problème par un dispositif de coupe de végétaux selon la revendication 1.

Le dispositif selon l'invention est encore remarquable en ce que :
- lesdits outils de coupe sont positionnés à une distance du broyeur d'environ une dizaine de centimètres,
- lesdits outils de coupe sont positionnés à une distance du broyeur pouvant aller jusqu'à environ 15 centimètres,
- la poutre support porte les axes de rotation des outils de coupe et renferme les moyens d'entraînement en rotation desdits axes,
- la poutre support présente des extrémités par lesquelles elle est portée par les parois latérales du châssis,
- lesdites extrémités de la poutre support sont disposées dans des lumières desdites parois latérales s'étendant dans une direction perpendiculaire à l'axe du broyeur,
- un moyen de réglage permet de régler la position de la poutre support par rapport au broyeur,
- ledit moyen de réglage est composé d'une vis sans fin engrenant avec un dispositif fixe solidaire du châssis et commandée en rotation.

L'invention sera mieux comprise grâce à la description qui va suivre donnée à titre d'exemple non limitatif en référence aux dessins annexés dans lesquels :
- la figure 1 est une vue en perspective d'un dispositif de coupe suivant une variante de réalisation de l'invention,
- la figure 2 est une vue en perspective d'un dispositif de coupe qui n'est pas un mode de réalisation de l'invention.

Comme visible sur les dessins, le dispositif selon l'invention comporte de manière connue en soi un châssis 1 à l'intérieur duquel est positionné un broyeur 2 composé d'un arbre 20 portant à sa périphérie des fléaux de coupe 21. Ledit arbre 20 est porté à ses extrémités par des parois latérales 10 du châssis 1.

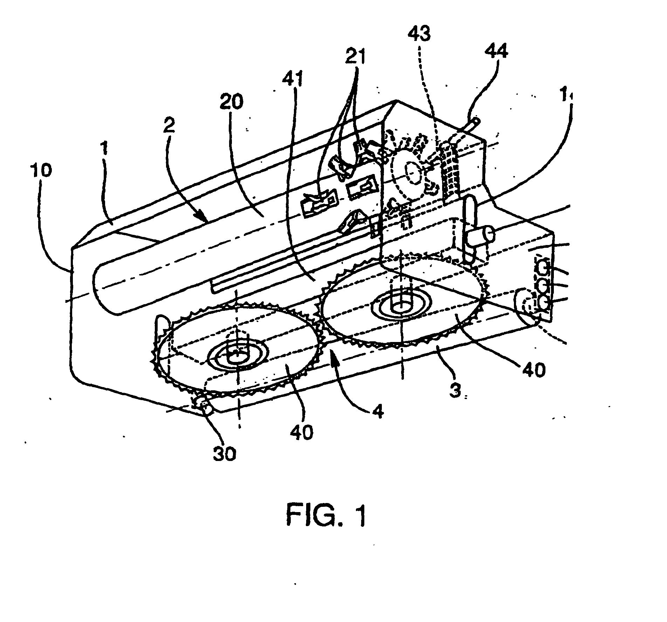

Les outils de coupe 40 de l'ensemble de coupe 4 sont, dans l'exemple représenté à la figure 1, constitués par des scies circulaires 40 disposées dans un plan parallèle à l'axe du broyeur 2.

Suivant l'invention, ces outils de coupe 40 sont positionnés à une distance du broyeur d'environ une dizaine de centimètres. Par cette disposition, lors de la taille d'arbustes, les fléaux 21 du broyeur 2 coupent les branches à une longueur déterminée par la position dudit broyeur, puis, les scies circulaires 40 recoupent lesdites branches à environ dix centimètres de la première coupe ce qui permet d'éliminer les parties des extrémités de branches qui ont été éclatées lors du passage du broyeur.

De manière avantageuse, on obtient ainsi une coupe qui présente à la fois l'avantage d'être nette et celui d'avoir débarrassé les végétaux des parties éclatées qui les rendent vulnérables aux insectes et aux maladies.

L'ensemble de coupe 4 comporte une poutre support 41 qui porte les axes de rotation des scies circulaires 40 et renferme les moyens d'entraînement en rotation desdits axes.

La poutre support 41 est portée à ses extrémités 42 par les parois latérales 10 du châssis 1.

De préférence, comme représenté au dessin, lesdites extrémités 42 de la poutre support 41 sont disposées dans des lumières 14 des parois latérales 10 s'étendant dans une direction perpendiculaire à l'axe du broyeur 2. Cette disposition permet de régler la distance séparant les scies circulaires 40 du volume décrit par le broyeur 2 au cours de sa rotation afin de régler la longueur de branchage recoupée lors du passage des scies circulaires 40.

La lumière 14 est telle que lesdites scies circulaires peuvent être espacées du volume décrit par le broyeur d'une distance pouvant aller jusqu'à environ 15 centimètres.

Le moyen de réglage de la position de la poutre support 41 par rapport au broyeur 2 est, dans l'exemple de réalisation représenté au dessin, composé d'une vis sans fin 43 engrenant avec un dispositif fixe, non représenté au dessin, solidaire du châssis et pouvant être commandée en rotation par une poignée 44.

De manière connue en soi, la machine selon l'invention présente également un rouleau palpeur 3 portant deux embouts 30 destinés à être disposés dans des ouvertures 13 des parois latérales 10 du châssis. Plusieurs ouvertures 13 sont prévues dans chaque paroi latérale 10 afin de permettre le réglage en hauteur de la position du rouleau 3.

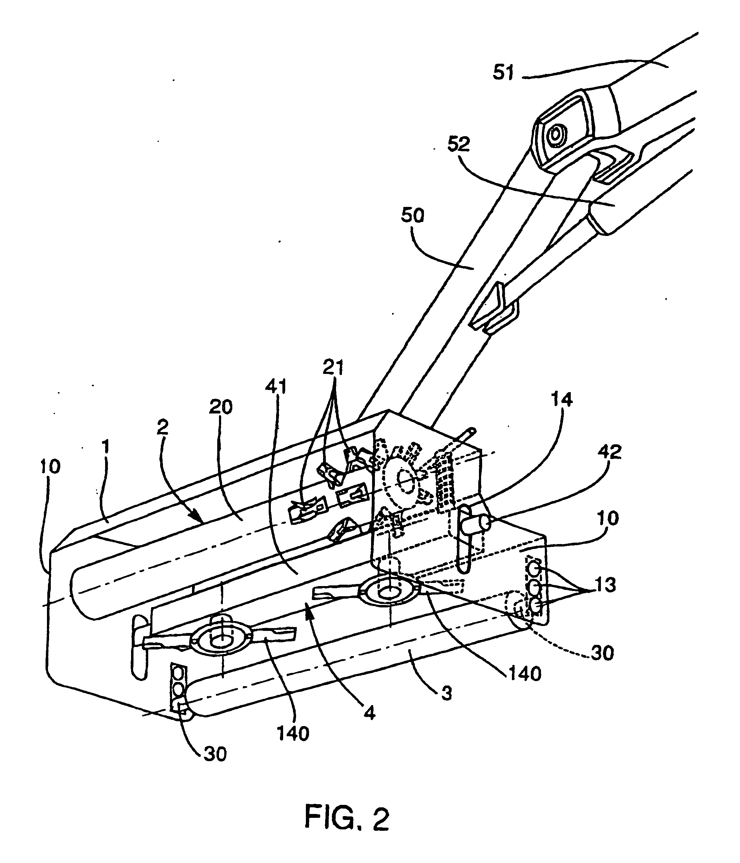

Dans l'exemple de réalisation de la figure 2, les scies circulaires 40 destinées à assurer la coupe de branches épaisses et rigides sont remplacées par des lames de coupe 140 semblables à des lames de tondeuses. Ces lames de coupe 140 sont suffisantes lorsqu'il faut couper des pousses jeunes ou pas très rigides.

On a représenté sur cette figure 2 l'extrémité du bras de levage en deux parties 50, 51 et l'un, 52, des vérins de réglage de la position de ce bras et de la machine qu'il porte.

De manière avantageuse, afin de permettre l'utilisation de la machine dans différentes situations de travail, il est prévu de rendre facilement démontable le broyeur 2 et l'ensemble de coupe 4.

L'utilisateur peut ainsi au choix utiliser une épareuse simple ne comportant que le broyeur tournant 2, une faucheuse ou une machine de coupe ne comportant qu'un ensemble de coupe 4 adéquat ou une machine comportant à la fois un broyeur 2 et un ensemble de coupe 4.

De plus, afin d'augmenter encore les possibilités de travail de la machine, les lumières 14 seront de longueur telle que l'ensemble de coupe puisse être positionné soit près du volume décrit par le broyeur afin de permettre une coupe haute de l'herbe, soit à une dizaine de centimètres dudit volume afin de permettre la recoupe des parties endommagées des arbustes.

## Revendications

1. Dispositif de coupe de végétaux comportant un châssis (1) dans lequel sont disposés un broyeur (2) à fléaux (21) et un ensemble de coupe (4) constitué par une poutre support (41) portant des outils de coupe (40), **caractérisé en ce que** les outils de coupe (40) dudit ensemble de coupe (4) sont des outils assurant la coupe de branches épaisses et rigides et **en ce que** la position de ladite poutre support (41) est réglable en hauteur afin de pouvoir placer lesdits outils de coupe (40) à une distance du volume décrit par les fléaux (21) du broyeur (2) d'environ une dizaine de centimètres.

2. Dispositif selon la revendication 1, **caractérisé en ce que** lesdits outils de coupe (40) sont positionnés à une distance du broyeur (2) pouvant aller jusqu'à environ 15 centimètres.

3. Dispositif selon la revendication 1 ou selon la revendication 2, **caractérisé en ce que** la poutre support (41) porte les axes de rotation des outils de coupe (40) et renferme les moyens d'entraînement en rotation desdits axes.

4. Dispositif selon l'une quelconque des revendications 1 à 3, **caractérisé en ce que** la poutre support (41) présente des extrémités (42) par lesquelles elle est portée par les parois latérales (10) du châssis (1).

5. Dispositif selon la revendication 4, **caractérisé en ce que** lesdites extrémités (42) de la poutre support (41) sont disposées dans des lumières (14) desdites parois latérales (10) s'étendant dans une direction perpendiculaire à l'axe du broyeur (2).

6. Dispositif selon l'une quelconque des revendications précédentes, **caractérisé en ce qu'**un moyen de réglage permet de régler la position de la poutre support (41) par rapport au broyeur (2).

7. Dispositif selon la revendication 6, **caractérisé en ce que** ledit moyen de réglage est composé d'une vis sans fin (43) engrenant avec un dispositif fixe solidaire du châssis et commandée en rotation.

8. Dispositif selon l'une quelconque des revendications 1 à 7, **caractérisé en ce que** les outils de coupe (40) sont des scies circulaires.

## Patentansprüche

1. Vorrichtung zum Schneiden von Pflanzen, mit einem Gestell (1), in dem ein Zerkleinerer (2) mit Dreschflegeln (21) und eine Schneidanordnung (4), die durch einen Schneidwerkzeuge (40) tragenden Tragebalken (41) gebildet ist, angeordnet sind, **dadurch gekennzeichnet, daß** die Schneidwerkzeuge (40) der Schneidanordnung (4) Werkzeuge sind, die das Schneiden dicker und steifer Äste sicherstellen, und daß die Position des Tragebalkens (41) höhenverstellbar ist, um die Schneidwerkzeuge (40) in einem Abstand von etwa zehn Zentimetern vom durch die Dreschflegel (21) des Zerkleinerers (2) beschriebenen Volumen anzuordnen.

2. Vorrichtung nach Anspruch 1, **dadurch gekennzeichnet, daß** die Schneidwerkzeuge (40) in einem Abstand vom Zerkleinerer (2) angeordnet sind, der bis zu etwa 15 Zentimeter betragen kann.

3. Vorrichtung nach Anspruch 1 oder nach Anspruch 2, **dadurch gekennzeichnet, daß** der Tragebalken (41) die Drehwellen der Schneidwerkzeuge (40) trägt und die Mittel zum Rotationsantrieb dieser Wellen enthält.

4. Vorrichtung nach einem der Ansprüche 1 bis 3, **dadurch gekennzeichnet, daß** der Tragebalken (41) Enden (42) aufweist, über die er von den Seitenwänden (10) des Gestells (1) getragen wird.

5. Vorrichtung nach Anspruch 4, **dadurch gekennzeichnet, daß** die Enden (42) des Tragebalkens (41) in Schlitzen (14) der Seitenwände (10) angeordnet sind, die in einer Richtung senkrecht zur Achse des Zerkleinerers (2) verlaufen.

6. Vorrichtung nach einem der vorhergehenden Ansprüche, **dadurch gekennzeichnet, daß** eine Einstelleinrichtung es gestattet, die Lage des Tragebalkens (41) relativ zum Zerkleinerer (2) einzustellen.

7. Vorrichtung nach Anspruch 6, **dadurch gekennzeichnet, daß** die Einstelleinrichtung durch eine Schnecke (43) gebildet wird, die mit einer feststehenden, einstückig mit dem Gestell ausgebildeten Vorrichtung in Eingriff steht und drehbetätigbar ist.

8. Vorrichtung nach einem der Ansprüche 1 bis 7, **dadurch gekennzeichnet, daß** die Schneidwerkzeuge (40) Kreissägen sind.

## Claims

1. A plant cutting device comprising a body (1) in which are arranged a chopper (2) with flails (21) and a cutting assembly (4) consisting of a support beam (41) bearing cutting implements (40), **characterised in that** the cutting implements (40) of said cutting assembly (4) are implements which cut thick, rigid branches and **in that** the position of said support beam (41) is vertically adjustable so that said cutting implements (40) can be placed at a distance from the volume described by the flails (21) of the chopper (2) of about ten centimetres.

2. A device according to Claim 1, **characterised in that** said cutting implements (40) are positioned at a distance from the chopper (2) which may be of up to about 15 centimetres.

3. A device according to Claim 1 or Claim 2, **characterised in that** the support beam (41) bears the rotation shafts of the cutting implements (40) and includes the means for driving said shafts in rotation.

4. A device according to any one of Claims 1 to 3, **characterised in that** the support beam (41) has ends (42) via which it is borne by the lateral walls (10) of the body (1).

5. A device according to Claim 4, **characterised in that** said ends (42) of the support beam (41) are arranged in holes (14) in said lateral walls (10) which extend in a direction perpendicular to the axis of the chopper (2).

6. A device according to any one of the preceding claims, **characterised in that** an adjustment means makes it possible to adjust the position of the support beam (41) relative to the chopper (2).

7. A device according to Claim 6, **characterised in that** said adjustment means is composed of an endless screw (43) which engages with a fixed device which is integral with the body and is controlled in rotation.

8. A device according to any one of Claims 1 to 7, **characterised in that** the cutting implements (40) are circular saws.
